# EUROPEAN PATENT SPECIFICATION

(11) **EP 0 723 659 B1**
(45) Date of publication and mention of the grant of the patent: **11.06.1997**
(21) Application number: 94929489.6
(22) Date of filing: 05.10.1994
(51) Int. Cl.: G01N 23/10

(54) **AN APPARATUS FOR MEASURING THE EARTH ON AGRICULTURAL CROPS, SUCH AS BEETS**
GERÄT ZUM MESSEN DER ERDE AUF LANDWIRTSCHAFTLICHEM ERNTEGUT WIE BEISPIELSWEISE RÜBEN
APPAREIL MESURANT LA QUANTITE DE TERRE SUR DES LEGUMES RECOLTES TELS QUE DES BETTERAVES

(30) Priority: 11.10.1993 DK 450/93
(43) Date of publication of application: 31.07.1996
(73) Proprietor: DANISCO A/S, DK-1411 Copenhagen K. (DK)
(72) Inventor: JORGENSEN, Lars, Bo, DK-4800 Nykobing F (DK)
(74) Representative: Siiger, Joergen
(86) International application number: DK9400369
(87) International publication number: WO9510769

(56) References cited:
- WO-A-94/15200
- SE-A- 9 203 711
- DK, L, 9193 (DANISCO A/S) 28.07.1994

## Description

### Technical Field

The invention relates to an apparatus for measuring the amount of earth on agricultural crops, such as beets, on the basis of an absorption measurement of γ-rays of different energies, said apparatus utilizing that high-energy radiation is absorbed to an equal extent by earth and beets, and that low-energy radiation is most absorbed by earth, minerals, and stones and less absorbed by organic material and water.

### Background Art

The Eastern-German Publication "Isotopen Praxis" 23, 1987, pages 58 to 64 discloses a method of determining the degree of purity of potatoes on a conveyor belt by means of γ-rays of different energies. This method necessitates a removal of a sample from a cartload.

### Brief Description of the Invention

In order to achieve a fast measurement of the earth content in a cartload of crops, such as beets, it is advantageous to use a measuring method which can be carried out directly in said cartload.

The apparatus according to the invention is characterised in that it comprises at least two probes which can be inserted in a cartload of crops, at least one of said probes comprising one or more γ-radiation sources and at least one of the remaining probes comprising one or more detectors.

Moreover according to the invention each probe may be formed by a tube comprising a radioactive Cs-source and a radioactive Am-source, whereby one source can be open simultaneously with the other source being closed.

Furthermore according to the invention the second probe may be formed by a tube comprising a set of detectors.

In addition according to the invention the radioactive sources may be moved up and down inside the tube at the same time as the remaining detectors in a second tube can be moved up and down correspondingly. In this manner it is possible to perform measurements of a large volume and thereby increase the measuring accuracy.

### Brief Description of the Drawings

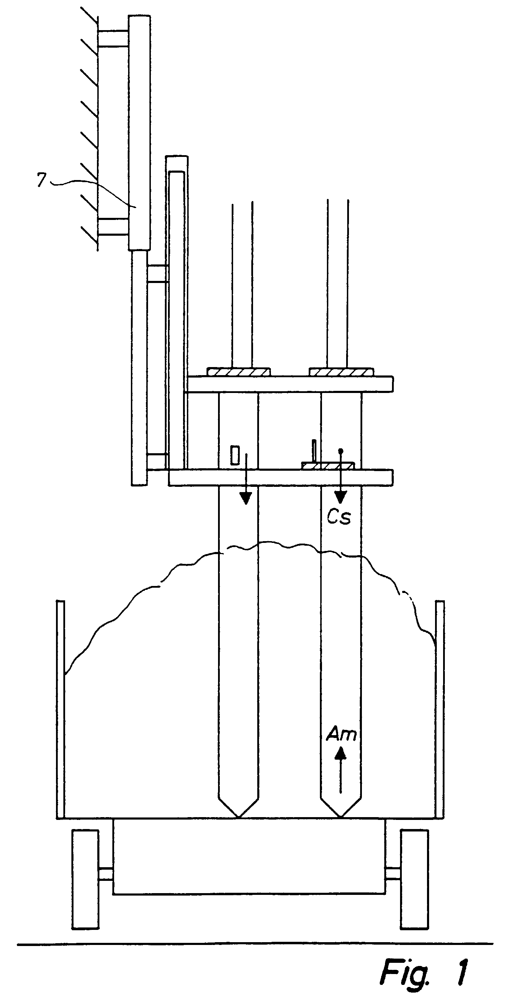

The invention and particularly advantageous embodiments are described in greater detail below with reference to the accompanying drawings, in which
Fig. 1 illustrates an apparatus for measuring earth on agricultural crops, such as beets, comprising two tubes which can be bored into a cartload of beets,
Fig. 2 illustrates details of the two tubes,
Fig. 3 illustrates a radiation source unit and a detector unit in the bottom of the tubes,
Fig. 4 illustrates on a larger scale the tube comprising the source unit,
Fig. 5 is a cross-sectional view through the source unit,
Fig. 6 illustrates the detector characteristics,
Fig. 7 is a side and a top view, respectively, of the radiation field from the source unit,
Fig. 8 illustrates the value (the ratio of absorption at high to at low radiation energy, respectively) versus the earth percentage in the cartload.

### Best Mode for Carrying Out the Invention

The method of measuring earth in agricultural crops, such as beets, is based on a measurement of the absorption in the beet material of γ-radiations of two different energies. The measuring method is described in Danish Patent Application No. 1557/92.

In order to achieve a fast and accurate measurement of the earth content in for instance a cartload of beets, it is advantageous to use a measuring method which can be performed directly on the cartload. According to the invention an apparatus is used which comprises two or more probes in form of tubes 1, 2 which can be inserted in the cartload while rotated. Each tube 1, 2 is provided with an outer turning ring. The rotation is provided by means of a hydraulic motor 9 connected to the turning rings of the tubes through a gear in such a manner that said tubes can be "screwed" into the cartload.

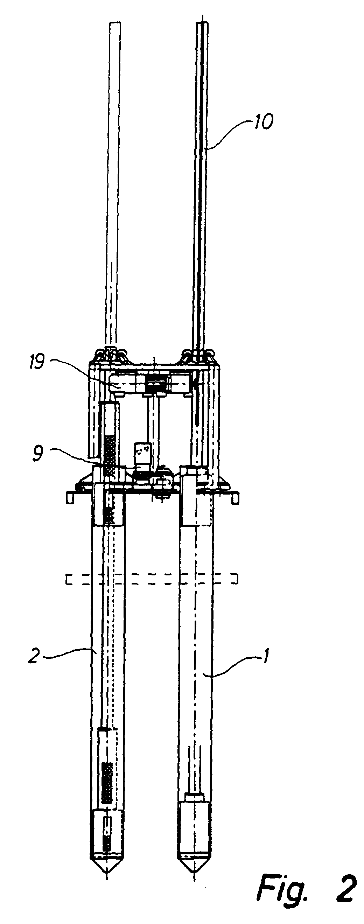

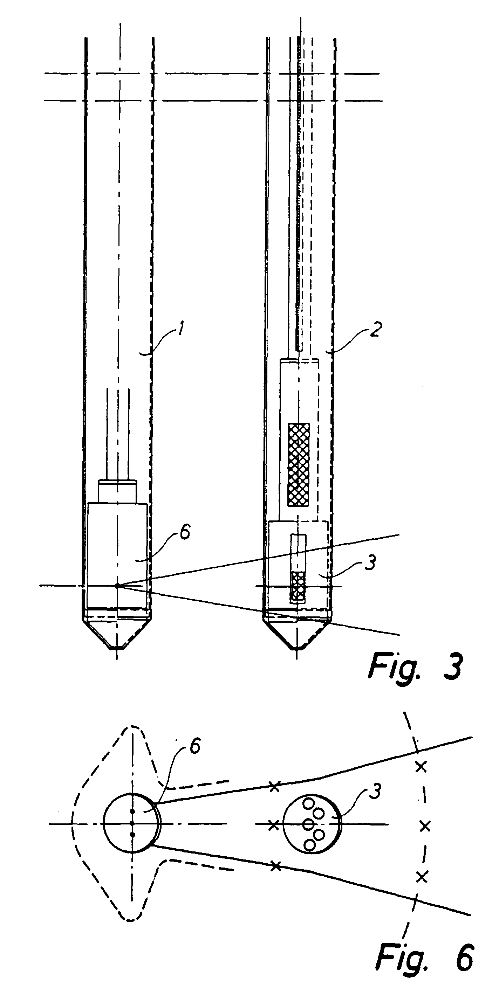

The tubes 1, 2 are of a peripheral distance of approximately 450 mm and an outer diameter of 250 mm. A source unit 3 is inserted in one tube 2, said source unit containing radioactive Cs-isotopes emitting hard γ-radiation and radioactive Am-isotopes emitting a soft γ-radiation. A detector unit 6 is simultaneously inserted into the second tube 1. Fig. 2 illustrates a guide rod 10 in form of a rack for the source unit 3 and the detector unit 6, respectively. Fig. 3 illustrates the position of the source unit 3 and the detector unit 6 in the bottom of the tubes 1, 2.

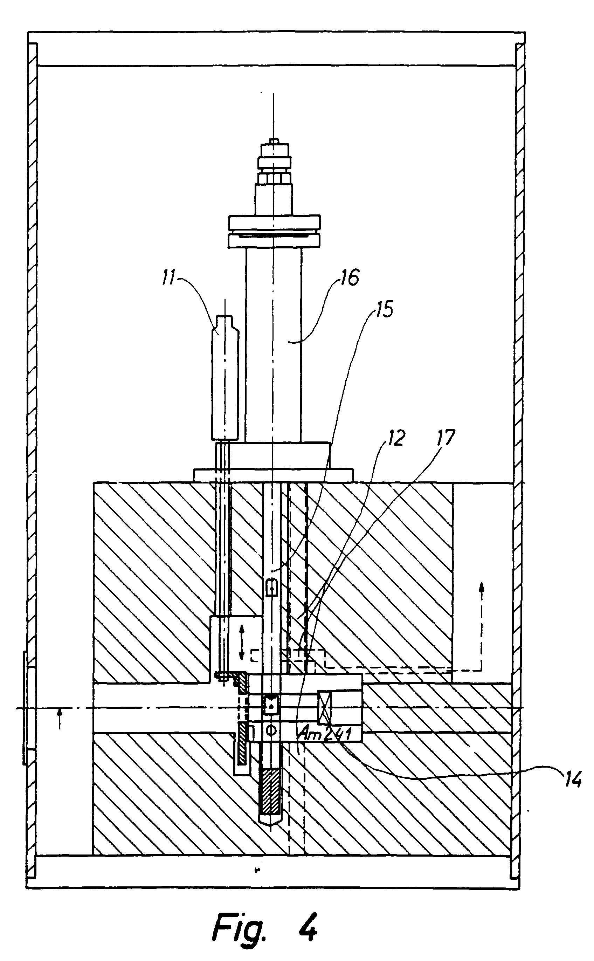

The insertion into the tubes is performed by means of the guide rods 10 provided with teeth, and during said insertion the Cs-source 15 is open while the Am-source 14 is closed. Then the detector unit 6 measures the absorption of the hard γ-radiation. When the source unit 3 and the detector unit 6 reach the bottom of the tubes 1, 2, the Cs-source 15 is closed and the Am-source 14 is opened. The Cs-source 15 is closed by a retraction by means of a pneumatic cylinder 16. The opening of the Am-source 14 is performed by moving a closing plate 18 by means of a pneumatic cylinder 11, cf. Fig. 4. The rods 10 is secured to the source and the detector unit, respectively, and can be moved up and down by means of a gear wheel 19 driven by an electric motor. The tubes 1, 2 are suspended in a tower which can be moved up and down by means of a hydraulic system 7. During the operation, the tower is initially lowered to the top of the cartload of beets whereafter the tubes 1, 2 are inserted in the cartload while rotated.

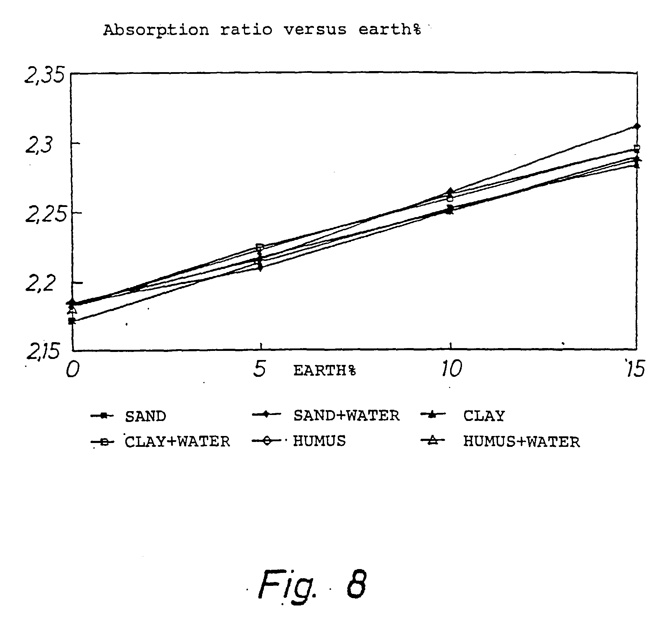

Subsequently, the source unit 3 and the detector unit 6 are simultaneously inserted through the tubes at a constant speed of approximately 80 mm/sec. Then the detector unit 6 measures the absorption of the soft γ-radiation. The detector unit 6 presents a characteristics as shown in Fig. 6. Like previously, the ratio of the absorption of the soft to the absorption of the hard γ-radiation between the source unit 3 and the detector unit 6 is used as a measurement for the earth percentage in the cartload of beets. It is important for the determination of the content of earth that the measuring is performed on the maximum portion of beets. The measuring volume between the two tubes 1, 2 is determined by the distance between the tubes and by the width of the horizontal γ-radiation field therebetween.

The source unit 3 comprises three Cs-sources of a strength of 370 MBq and 3 Am-sources of a strength of 111 GBq. The resulting radiation field corresponds substantially to the diameter of the tubes, cf. Fig. 7. A number of detector crystals are placed side by side in the detector unit 6 in the oppositely positioned tube 1 for detecting the above wide radiation field, cf. Fig. 6.

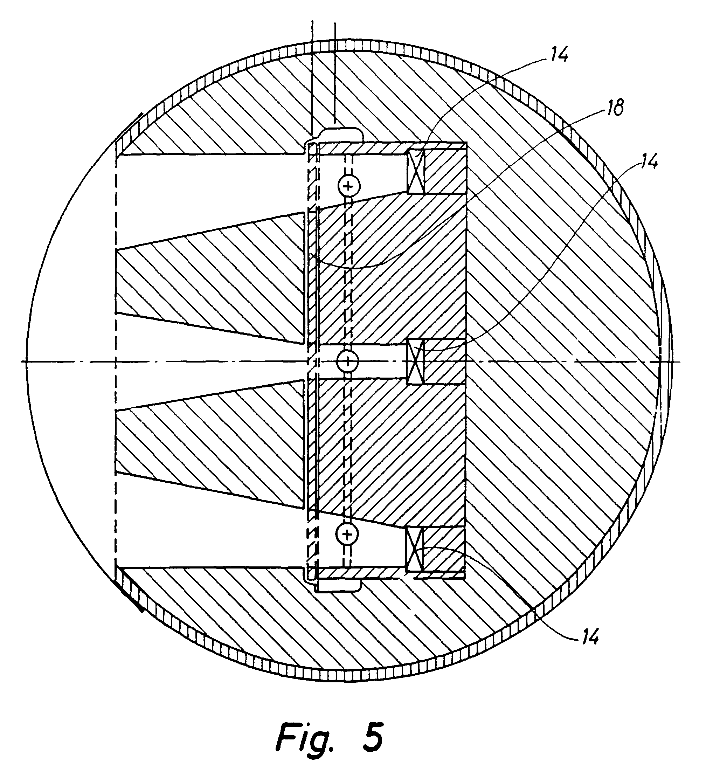

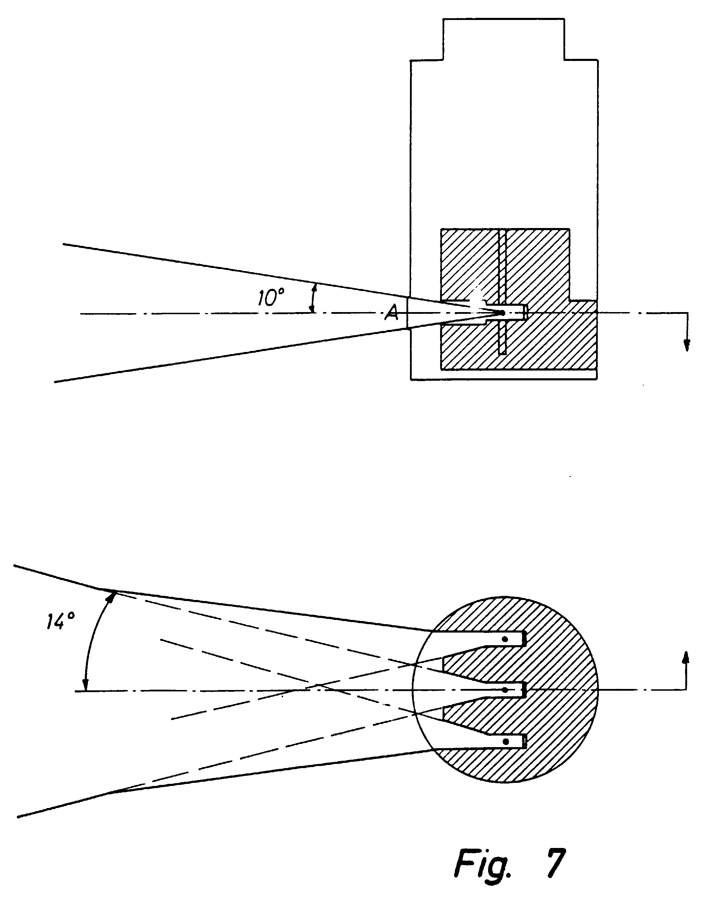

The Cs-radiation sources are accommodated in a closed brass tube, where the top is connected to the base of a pneumatic cylinder 16. Fig. 4 illustrates the pneumatic cylinder 16 which can move the Cs-sources 15 through the piston rod between an advanced position and a retracted position inside a substantially cylindrical lead shielding. The lead shielding comprises collimator openings for the sources, cf. Figs. 4, 5, and 7. The lead shielding includes a top part, a bottom part, and an intermediary part with a block provided with the collimator openings. The block carries three Am-sources 14 and serves as a guide for the closing plate 18 for the Am-sources 14, and as a guide for the bars advancing the Cs-sources 15. The low-energy radiation from the Am-sources 14 is dimmed by the closing plate 18 which can be displaced by means of the pneumatic cylinder 11. An infrared light beam is used for detecting the position of the bars of the Cs-sources, where the transmitter and the receiver are accommodated at channels 17 in the block. If only one of the bars of the sources interrupts the light beam, the indication is changed. The position of the closing plate 18 for the Am-source 14 is detected by means of an inductive sensor. The entire structure is accommodated in a cylindrical housing. The length of the housing is approximately 380 mm.

Fig. 7 illustrates the radiation diagram of the sources. The shape of the collimator openings and the position of the sources are such that the radiation angles are substantially identical for the Cs-sources and the Am-sources.

An amount of beets in the magnitude 100 kg is found between the two tubes 1, 2 in a cartload of beets of a height of approximately 2 m, said amount being three to four times the volume of the sample removed from the cartload by the previous method.

Fig. 8 illustrates the relation between the measuring values RM and the real earth percentage in the cartload of beets. The measuring values RM indicate the ratio of the absorption of the soft to the absorption of the hard γ-radiation in the cartload of beets. The relation shown in Fig. 8 is used for calibrating the measuring signals.

A measuring period lasts typically 1 min.

## Claims

1. An apparatus for measuring the amount of earth on agricultural crops, such as beets, on the basis of an absorption measurement of γ-rays of different energies, said apparatus utilizing that high-energy radiation is absorbed to an equal extent by earth and beets, whereas low-energy radiation is most absorbed by earth, minerals, and stones and less absorbed by organic material and water, **characterised** in that it comprises at least two probes which can be inserted in a cartload of crops, at least one of said probes comprising one or more γ-radiation sources (3) and at least one of the remaining probes comprising one or more detectors (6).

2. An apparatus as claimed in claim 1, **characterised** in that one probe is formed by a tube (1) comprising a radioactive Cs-source and a radioactive Am-source, whereby one source can be open simultaneously with the other source being closed.

3. An apparatus as claimed in claim 1 or 2, **characterised** in that the second probe is formed by a tube (2) comprising a set of detectors (6).

4. An apparatus as claimed in one or more of the preceding claims 1 to 3, **characterised** in that the radioactive sources (3) can be moved up and down inside the tube (1) at the same time as the remaining detectors (6) in a second tube (2) can be moved up and down correspondingly.

5. An apparatus as claimed in claim 4, **characterised** in that the sources (3) and the detectors (6) can be moved up and down at a speed of approximately 80 mm/sec.

6. An apparatus as claimed in one or more of the preceding claims, **characterised** in that the centre distance between the tubes (1, 2) is approximately 650 mm.

## Patentansprüche

1. Gerät zum Messen der Erde auf landwirtschaftlichem Erntegut, beispielsweise Rüben, auf der Basis einer Absorptionsmessung von γ-Strahlen unterschiedlicher Energien, wobei die Vorrichtung ausnutzt, daß Erde und Rüben hochenergetische Strahlung im gleichen Umfang absorbiert, während niederenergetische Strahlung durch Erde, Mineralien und Steine am stärksten absorbiert und durch organisches Material und Wasser weniger absorbiert wird, gekennzeichnet durch mindestens zwei Sonden, die in eine Erntegut-Wagenladung eingesetzt werden können, wobei mindestens eine der Proben eine oder mehrere γ-Strahlungsquellen (3) aufweist und mindestens eine der verbleibenden Sonden einen oder mehrere Detektoren (6) aufweist.

2. Vorrichtung nach Anspruch 1, dadurch gekennzeichnet, daß eine Sonde durch ein Rohr (1) gebildet wird, das eine radioaktive Cs-Quelle und eine radioaktive Am-Quelle aufweist, wobei eine Quelle geöffnet werden kann, während die andere Quelle gleichzeitig geschlossen ist.

3. Vorrichtung nach Anspruch 1 oder 2, dadurch gekennzeichnet, daß die zweite Sonde durch ein Rohr (2) gebildet wird, das einen Satz von Detektoren (6) aufweist.

4. Vorrichtung nach einem oder mehreren der vorstehenden Ansprüche 1 bis 3, dadurch gekennzeichnet, daß die radioaktiven Quellen (3) innerhalb des Rohrs auf- und abbewegbar sind, während gleichzeitig die verbleibenden Detektoren (6) in einem zweiten Rohr (2) entsprechend auf- und abwärts bewegbar sind.

5. Vorrichtung nach Anspruch 4, dadurch gekennzeichnet, daß die Quellen (3) und die Detektoren (6) mit einer Geschwindigkeit von etwa 80 mm/sec. aufwärts und abwärts bewegbar sind.

6. Vorrichtung nach einem oder mehreren der vorstehenden Ansprüche, dadurch gekennzeichnet, daß der Mittenabstand zwischen den Rohren (1, 2) etwa 650 mm beträgt.

## Revendications

1. Un appareil pour mesurer la quantité de terre sur des produits de récolte agricole, tels que des betteraves, sur la base d'une mesure d'absorption de rayons γ d'énergies différentes, ledit appareil utilisant le fait qu'un rayonnement haute énergie est absorbé également par la terre et les betteraves, tandis qu'un rayonnement basse énergie est pour la plus grande partie absorbé par la terre, les minéraux, et les pierres et moins absorbé par les matières organiques et l'eau, caractérisé en ce qu'il comprend au moins deux sondes qui peuvent être insérées dans une charretée de récolte, au moins une desdites sondes comprenant une ou plusieurs sources (3) de rayonnement γ et au moins une des sondes restantes comprenant un ou plusieurs détecteurs (6).

2. Un appareil selon la revendication 1, caractérisé en ce qu'une sonde est formée par un tube comprenant une source au Cs radioactif et une source à l'Am radioactif, de sorte qu'une source peut être ouverte simultanément à la fermeture de l'autre source.

3. Un appareil selon la revendication 1 ou 2, caractérisé en ce que la seconde sonde est formée par un tube (2) comprenant un jeu de détecteurs (6).

4. Un appareil selon une ou plusieurs des revendications 1 à 3, caractérisé en ce que les sources (3) radioactives peuvent être montées et descendues dans le tube (1) en même temps que les détecteurs (6) restants dans un second tube (2) peuvent être montés et descendus en correspondance.

5. Un appareil selon la revendication 4, caractérisé en ce que les sources (3) et les détecteurs (6) peuvent être montés et descendus à une vitesse approximativement de 80 mm/s.

6. Un appareil selon une ou plusieurs des revendications précédentes, caractérisé en ce que la distance des centres entre les tubes (1, 2) est approximativement de 650 mm.
